Europäisches Patentamt

European Patent Office

Office européen des brevets

(19)

(11) Veröffentlichungsnummer: **0 292 844 B1**

# EUROPÄISCHE PATENTSCHRIFT

(12)

(45) Veröffentlichungstag der Patentschrift: **22.07.92**

(21) Anmeldenummer: **88107893.5**

(22) Anmeldetag: **18.05.88**

(51) Int. Cl.⁵: **G01N 30/18**, G01N 1/22, B01L 3/00

(54) **Vorrichtung zur Nahme und/oder Aufgabe von Gasproben.**

(30) Priorität: **29.05.87 DE 8707698 U**

(43) Veröffentlichungstag der Anmeldung:
**30.11.88 Patentblatt 88/48**

(45) Bekanntmachung des Hinweises auf die
Patenterteilung:
**22.07.92 Patentblatt 92/30**

(84) Benannte Vertragsstaaten:
**AT BE CH DE ES FR GB GR IT LI NL SE**

(56) Entgegenhaltungen:
**EP-A- 0 206 113      DE-B- 1 773 961**
**DE-U- 8 707 698      US-A- 3 754 434**
**US-A- 3 902 372      US-A- 4 389 372**

(73) Patentinhaber: **AMA APPARATE FÜR MESS-
UND ANALYSENTECHNIK GMBH
Fichtestrasse 27
W-4010 Hilden(DE)**

(72) Erfinder: **Schlutow, Günter
Fichtestrasse 27
W-4010 Hilden(DE)**

(74) Vertreter: **Patentanwaltsbüro Cohausz & Florack
Schumannstrasse 97
W-4000 Düsseldorf 1(DE)**

EP 0 292 844 B1

**Beschreibung**

Die Erfindung betrifft eine Vorrichtung zur Nahme und/oder Aufgabe von Gasproben mit mehreren Sammelrohren, die der Reihe nach von einem Träger gehalten werden, wobei die Sammelrohre jeweils in einer Hülse einliegen, die auf beiden Seiten von Hohlnadeln durchstechbare Verschlüsse aufweist.

Es sind Aufgabegerate bekannt, bei denen zur Probenaufnahme die Sammelrohre in einem Karussell radial waagerecht eingelegt werden, um dann nacheinander von Trägergas durchspült zu werden, welches die Probe einem Gas-Chromatographen zuführt. Diese bekannte Vorrichtung erfordert ein Einlegen der Röhrchen von Hand, so daß der Arbeitsaufwand verhältnismäßig groß ist. Auch ist das Überführen der Röhrchen von dem Probenahmengerät zum Aufgabegerät aufwendig. Aus der US 3 754 434 ist es bekannt, Proben in Rohren zu sammeln, die einseitig angestochen werden, um die Probe abzusaugen. Hierbei kann von außen Luft in das Rohr nachströmen. Aus der DE 17 73 961 ist es ferner bekannt, Ampullen durch ein Förderband zu transportieren, deren Flüssigkeit analysiert wird.

Aufgabe der Erfindung ist es, eine Vorrichtung der eingangs genannten Art so zu verbessern, daß bei geringem Arbeitsaufwand und leichter Übergabe der Röhrchen von der Probenahmenvorrichtung zur Aufgabevorrichtung sichere Meßwerte erreicht werden.

Diese Aufgabe wird erfindungsgemäß entsprechenden kennzeichnenden Merkmalen des Anspruchs 1 gelöst.

Bei einer solchen Vorrichtung brauchen die Sammelrohre nicht mehr einzeln entnommen, transportiert und eingesetzt werden, sondern zahlreiche Röhrchen sind mit dem Endlosband verbunden und damit gemeinsam leicht einsetzbar als auch herausnehmbar. Der Arbeitsaufwand ist damit besonders gering und die Lage der Röhrchen sehr präzise.

Durch die beidseitigen durchstechbaren Verschlüsse können Nahme und Aufgabe automatisch und mit hoher Präzision erfolgen, so daß auch hierdurch der Arbeitsaufwand besonders gering ist.

Besonders vorteilhaft ist es, wenn die Verschlüsse Gummi-oder Silikonscheiben sind. Auch können die Verschlüsse in Öffnungen aufweisende Endkappen einliegen, die in die Hülsen oder in aufgesetzte Hülsenendstücke eingeschraubt sind. Eine solche Konstruktion ist besonders einfach. Vorzugsweise wird vorgeschlagen, daß das Endlosband eine Verschlußstelle zum Öffnen aufweist.

Um das Sammelröhrchen zur Aufgabe erhitzen zu können, wird vorgeschlagen, daß an der Hülse eine Niederspannungs-Widerstandsheizung mit zwei Polen anliegt. Ein Erhitzen der Endkappen wird vermieden, wenn an der Hülse außen zwei Kontakte anlegbar sind, durch die der Strom zur Aufheizung der Hülse fließt, so daß das in den Endkappen befindliche Dichtmaterial nicht erwärmt wird und das Meßergebnis nicht verfälscht. Hierbei sollte das Endlosband aus elektrisch isolierendem Material sein. Auch ist hierbei von Vorteil, wenn das Endlosband aus hitzefestem Material ist.

Eine einfache Handhabung wird dann erreicht, wenn die Hülsen über das Endlosband beidseitig hinausragen. Auch ist es zur Betätigung des Bandes von Vorteil, wenn es über zwei im Abstand angeordnete Rollen geführt ist. Hierbei ist es auch von Vorteil, wenn am Endlosband ein pneumatischer Schrittantrieb befestigt ist.

Um ein schnelles und gründliches Reinigen zu erreichen, ohne die Aufgabe-Kapillare hoch erhitzen zu müssen, wird vorgeschlagen, daß mehrere zusammengesetzte Magnetventile angeordnet sind, die nach der Aufgabe in die Trennkapillare die Aufgabe-Kapillare und das Sammelrohr gleichzeitig spülen.

Ein Ausführungsbeispiel der Erfindung ist in den Zeichnungen dargestellt und wir im folgenden näher beschrieben. Es zeigen:

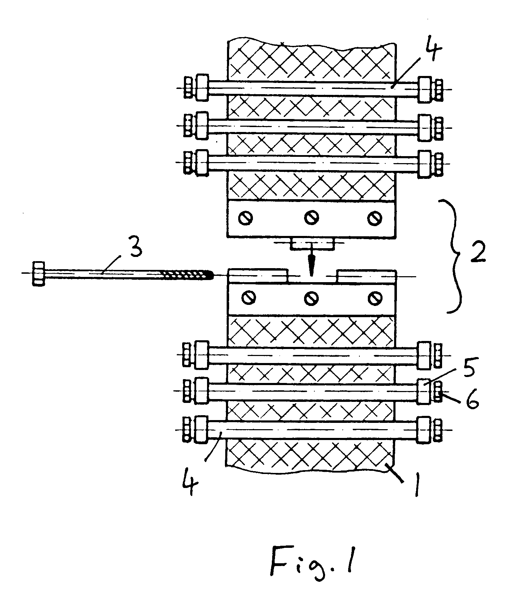

Figur 1  einen Ausschnitt aus dem Endlosband mit Verschlußstelle in einer Draufsicht;

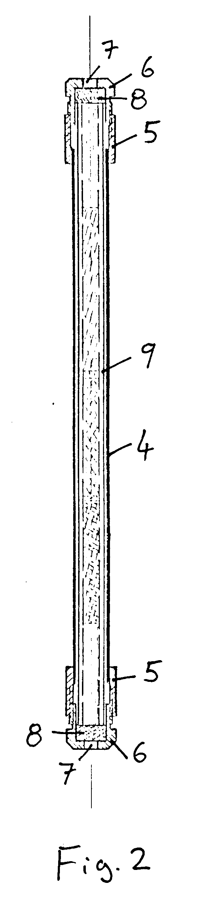

Figur 2  einen Längsschnitt durch das Sammelrohr mit Hülse,

Figur 3  einen senkrechten Schnitt durch die Vorrichtung mit Endlosband,

Figur 4  eine Spülschaltung mit Magnetventilen.

Ein Endlosband 1 ist über eine Verschlußstelle 2 verschlossen, die eine einsetzbare Schraube 3 enthält. Auf dem Endlosband 1 sind quer zur Längsrichtung parallel nebeneinander Hülsen 4 in regelmäßigen engen Abständen befestigt.

Jede Hülse besteht aus einem Metallrohr, insbesondere aus rostfreiem Stahl, auf dessen Enden Muttern 5 geschraubt sind. Diese Muttern stehen zu beiden Enden über, so daß in sie Endkappen 6 mit Außengewinden eingeschraubt werden können. Diese Endkappen 6 sind kopfseitig mit mittleren Bohrungen 7 versehen und tragen in sich Verschlüsse 8 aus Gummi- oder Silikonscheiben. Innerhalb der Hülse 4 liegt ein Sammelrohr 9 aus Glas, das mit einem Adsorbtionsmaterial gefüllt ist.

Das Endlosband 1 wird durch einen pneumatischen Antrieb schrittweise immmer um den Mittenabstand zweier Hülsen bewegt und in der Nahme- oder Aufgabestation dringen zu beiden Seiten durch die Bohrungen 7, die Verschlüsse 8, Hohlnadeln in das Sammelrohr hinein, um einer Probenahmenvorrichtung Gasproben zu nehmen, dann aber bei einer Aufgabevorrichtung das Sammelrohr mit einem Gas durchströmen zu lassen, das dann zu einem Gas-Chromatographen geführt wird.

Zur Bewegung des Endlosbandes 1 ist dieses über zwei Rollen 10 geführt, von denen mindestens eine schrittweise pneumatisch angetrieben ist. Um die im Sammelrohr gefangenen Materialien besser entnehmen zu können, wird die Metallhülse 4 durch eine Niederspannungs-Widerstandsheizung erhitzt, wobei an beiden Enden der Hülse je ein Pol angelegt wird, so daß die Hülse stromdurchflossen ist und damit sich erwärmt. Hierzu besteht das Endlosband aus elektrisch isolierendem und hitzefestem Material.

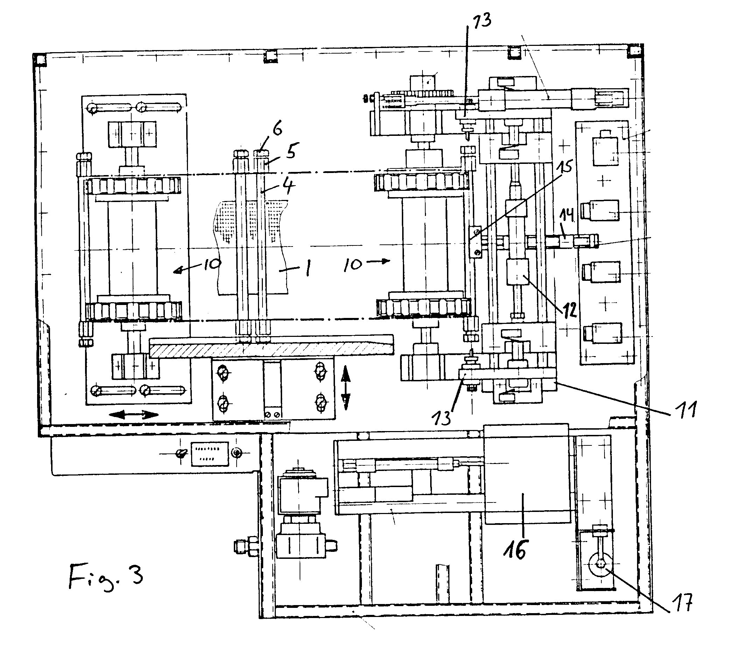

Die Breite des Bandes 1 ist geringer als die Länge der Hülsen 4, so daß die Enden der Hülsen leicht erreichbar sind. Figur 3 zeigt eine Einstechvorrichtung 11 mit Antriebszylinder 12 und Hohlnadeln 13 mit Polen für die Niederspannungs-Widerstandsheizung. Die pneumatische Rohrverriegelung 14 positioniert die Rohrhülse zwischen den Nadeln 13. Gleichzeitig ist in der Verriegelungsbacke 15 ein Thermofühler für die Temperaturmessung und -Regelung untergebracht.

Bei der Benutzung von Kapillartrennsäulen in der Gas-Chromatographie wird die Gasprobe mit dem Hilfsgasstrom durch die Nadel 13 über ein Ventil 16 zu einer tiefkühlbaren Aufgabe-Kapillare (Trap-Kapillare) 17 geführt. Hier wird die Probe so fokussiert, daß bei Schnellaufheizung derselben eine punktförmige Aufgabe erfolgt.

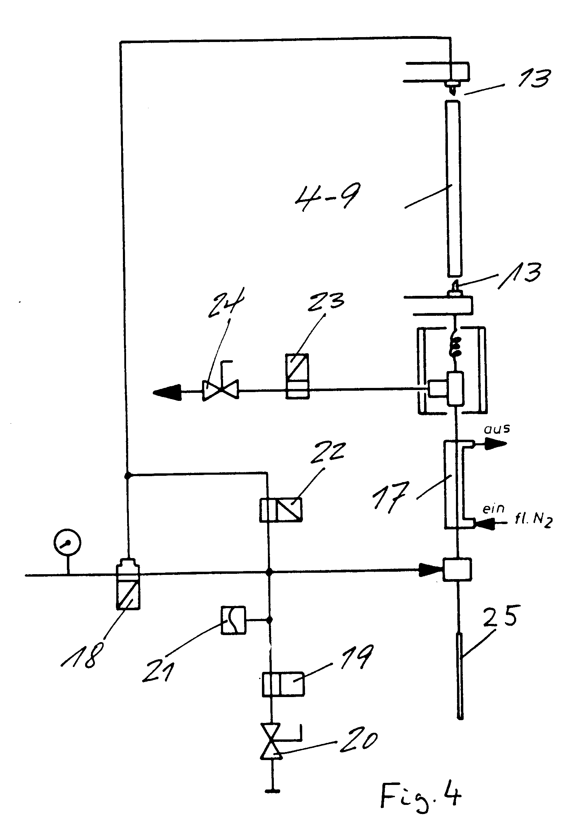

In einer alternativen Ausführung nach Figur 4 tritt an Stelle des mechanischen Schaltventils 16 eine Gasschaltung mit mehreren Magnet- und Nadelventilen, bei der der Hilfsgasstrom entfallen kann.

Zur Probenübergabe aus dem Sammelrohr 9 in die Aufgabe-Kapillare 17 werden die Magnetventile 18 und 19 eingeschaltet, so daß das Trägergas die desorbierten Substanzen aus dem Sammelrohr 9 in die tiefkühlbare Aufgabe-Kapillare 17 transportiert. Mit dem Nadelventil 20 wird der Gasstrom für die Probenübergabe eingestellt. Der Drucksensor 21 überwacht den Gasstrom für die Zeit der Probenübergabe.

Die Probenaufgabe auf die Trennkapillare 25 des Analysensystems erfolgt durch Schnellaufheizung der Aufgabe-Kapillare 17, wobei das Magnetventil 19 geschlossen wird. Nach beendeter Probenaufgabe werden das Magnetventil 18 geschlossen und die Magnetventile 22 und 23 geöffnet. Mit dem Nadelventil 24 wird ein Spülgasstrom eingestellt, mit dem sowohl das Sammelrohr 9 als auch die Aufgabe-Kapillare 17 - bei gleichzeitiger Erhöhung der Temperatur an 9 und 17 - von eventuellen Rückständen gereinigt werden können.

Die Qualität der Analyse wird durch die Nachreinigung der Aufgabe-Kapillare 17 bei gleichzeitiger Temperaturerhöhung erheblich verbessert. Die Spülung des Sammelrohres 9 bei erhöhter Temperatur erspart das externe Konditionieren der Rohrfüllungen und bringt damit eine erhebliche Zeitersparnis für den Widereinsatz.

**Patentansprüche**

1. Vorrichtung zur Nahme und/oder Aufgabe von Gasproben mit mehreren Sammelrohren, die der Reihe nach von einem Träger gehalten werden, wobei die Sammelrohre (9) jeweils in einer Hülse (4) einliegen, die auf beiden Seiten von Hohlnadeln durchstechbare Verschlüsse (8) aufweist, **dadurch gekennzeichnet**, daß die Sammelrohre (9) Adsorptionsrohre sind, daß der Träger ein Endlosband (1) ist, auf dem die Hülsen (4) quer zur Bandlängsrichtung nebeneinander befestigt sind, und daß die Probenahme-oder Probeaufgabestation so ausgebildet ist, daß zur Probenahme bzw. -aufgabe beide Verschlüsse des Adsorptionsrohres (9) von den Hohlnadeln (13) gleichzeitig durchstochen werden.

2. Vorrichtung nach Anspruch 1, **dadurch gekennzeichnet,** daß die Verschlüsse (8) Gummi-oder Silikonscheiben sind.

3. Vorrichtung nach einem der vorherigen Ansprüche, **dadurch gekennzeichnet,** daß die Verschlüsse (8) in Öffnungen aufweisende Endkappen (6) einliegen, die in Hülsen (4) oder in aufgesetzte Hülsenendstücke eingeschraubt sind.

4. Vorrichtung nach einem der vorherigen Ansprüche, **dadurch gekennzeichnet,** daß das Endlosband (1) eine Verschlußstelle (2) zum Öffnen aufweist.

5. Vorrichtung nach einem der vorherigen Ansprüche, **dadurch gekennzeichnet,** daß an der Hülse (4) eine Niederspannungs-Widerstandsheizung mit zwei Polen anliegt.

6. Vorrichtung nach Anspruch 1, **dadurch gekennzeichnet,** daß an der Hülse (4) außen zwei Kontakte anlegbar sind, durch die der Strom zur Aufheizung der Hülse fließt.

7. Vorrichtung nach einem der vorherigen Ansprüche, **dadurch gekennzeichnet,** daß das Endlosband (1) aus elektrisch isolierendem Material ist.

8. Vorrichtung nach einem der vorherigen Ansprüche, **dadurch gekennzeichnet,** daß das Endlosband (1) aus hitzefestem Material ist.

9. Vorrichtung nach einem der vorherigen Ansprüche, **dadurch gekennzeichnet,** daß die Hülsen (4) über das Endlosband (1) beidseitig hinausragen.

10. Vorrichtung nach einem der vorherigen Ansprüche, **dadurch gekennzeichnet,** daß das Endlosband (1) über zwei im Abstand angeordnete Rollen (10) geführt ist.

11. Vorrichtung nach einem der vorherigen Ansprüche, **dadurch gekennzeichnet,** daß am Endlosband (1) ein pneumatischer Schrittantrieb befestigt ist.

12. Vorrichtung nach einem der vorherigen Ansprüche, **dadurch gekennzeichnet,** daß mehrere zusammengesetzte Magnetventile (18,19,22,23) angeordnet sind, die nach der Aufgabe in die Trennkapillare (25) die Aufgabe-Kapillare (17) und das Adsorptionsrohr (9) gleichzeitig spülen.

**Claims**

1. An apparatus for the withdrawal and/or insertion of gas samples, having a number of collecting tubes retained in succession by a carrier, the collecting tubes (9) each being disposed in a sleeve (4) which has closures (8) pierceable by hollow needles on both sides, characterized in that the collecting tubes (9) are adsorption tubes, the carrier is an endless belt (1) to which the sleeves (4) are attached one beside the other transversely of the longitudinal direction of the belt, and the sample withdrawal or insertion station is so constructed that for sample withdrawal or insertion both closures of the adsorption tube are simultaneously pierced by the hollow needles (13).

2. An apparatus according to claim 1, characterized in that the closures (8) are rubber or silicon discs.

3. An apparatus according to one of the previous claims, characterized in that the closures (8) are disposed in end caps (6) formed with apertures and screwed into sleeves (4) or into fitted-on sleeve end members.

4. An apparatus according to one of the previous claims, characterized in that the endless belt (1) has a closure place (2) for opening.

5. An apparatus according to one of the previous claims, characterized in that a low voltage resistance heating with two poles bears against the sleeve (4).

6. An apparatus according to claim 1, characterized in that two contacts through which the current for heating the sleeve flows can be applied to the outside of the sleeve (4).

7. An apparatus according to one of the previous claims, characterized in that the endless belt (1) is made of an electrically insulating material.

8. An apparatus according to one of the previous claims, characterized in that the endless belt (1) is made of heat-resistant material.

9. An apparatus according to one of the previous claims, characterized in that the sleeves (4) extend beyond the endless belt (1) on both sides.

10. An apparatus according to one of the previous claims, characterized in that the endless belt (1) is guided over two spaced-out rollers (10).

11. An apparatus according to one of the previous claims, characterized in that a pneumatic stepping drive is attached to the endless belt (1).

12. An apparatus according to one of the previous claims, characterized in that a number of assembled magnetic valves (18, 19, 22, 23) are provided which, following insertion in the separating capillary tube (25), simultaneously flush the insertion capillary tube (17) and the adsorption tube (9).

**Revendications**

1. Dispositif pour le prélèvement et le chargement d'échantillons de gaz avec plusieurs tubes collecteurs qui sont tenus en rangée par un support, les tubes collecteurs (9) étant logés respectivement dans une gaine (4) qui présente des deux côtés des obturateurs (8) pouvant être transpercés par des aiguilles creuses,
caractérisé en ce que les tubes collecteurs (9) sont des tubes d'adsorption, que le support est une bande sans fin (1) sur laquelle les gaines (4) sont fixées les unes à côté des autres transversalement à la direction longitudinale de la bande, et que la station de prélèvement d'échantillons ou de chargement d'échantillons est conformée de telle manière que, pour le prélèvement d'échantillons ou respectivement le chargement d'échantillons, les deur obturateurs du tube d'adsorption (9) sont transpercés simultanément par les aiguilles creuses (13).

2. Dispositif selon la revendication 1,
caractérisé en ce que les obturateurs (8) sont
des disques de caoutchouc ou de silicone.

3. Dispositif selon l'une des revendications précédentes,
caractérisé en ce que les obturateurs (8) sont
logés dans des coiffes d'extrémité (6) présentant des ouvertures, qui sont vissées dans des
gaines (4) ou dans des pièces d'extrémité de
gaines rapportées.

4. Dispositif selon l'une des revendications précédentes,
caractérisé en ce que la bande sans fin (1)
présente un emplacement de fermeture (2)
pour l'ouvrir.

5. Dispositif selon l'une des revendications précédentes,
caractérisé en ce qu'un radiateur à résistance
basse tension avec deux pôles est adjacent à
la gaine (4).

6. Dispositif selon la revendication 1,
caractérisé en ce que deux contacts peuvent
être collés extérieurement à la gaine (4), à
travers lesquels s'écoule le courant pour le
chauffage de la gaine.

7. Dispositif selon l'une des revendications précédentes,
caractérisé en ce que la bande sans fin (1) est
en un matériau isolant électriquement.

8. Dispositif selon l'une des revendications précédentes,
caractérisé en ce que la bande sans fin (1) est
en un matériau résistant à la chaleur.

9. Dispositif selon l'une des revendications précédentes,
caractérisé en ce que les gaines (4) font saillie
extérieurement des deux côtés au-dessus de
la bande sans fin (1).

10. Dispositif selon l'une des revendications précédentes,
caractérisé en ce que la bande sans fin (1) est
guidée sur deux rouleaux (10) disposés à écartement.

11. Dispositif selon l'une des revendications précédentes,
caractérisé en ce qu'un entraînement pas à
pas pneumatique est fixé à la bande sans fin
(1).

12. Dispositif selon l'une des revendications précédentes,
caractérisé en ce que plusieurs vannes magnétiques (18, 19, 22, 23) assemblées sont
prévues qui, après le chargement dans les
capillaires séparateurs (25), lavent simultanément les capillaires de chargement (27) et le
tube d'adsorption (9).

Fig. 1

Fig. 2

Fig. 3

EP 0 292 844 B1

Fig. 4